# EUROPÄISCHE PATENTANMELDUNG

(11) **EP 2 048 430 A2**
(43) Veröffentlichungstag der Anmeldung: **15.04.2009**
(21) Anmeldenummer: 08017624.1
(22) Anmeldetag: 08.10.2008
(51) Int. Cl.: F21S 8/12, B60Q 1/00

(54) **Beleuchtungseinrichtung für Fahrzeuge**

(30) Priorität: 10.10.2007 DE 102007048762
(71) Anmelder: Hella KGaA Hueck & Co., 59552 Lippstadt (DE)
(72) Erfinder: Dünschede, Elmar, 33098 Paderborn (DE); Taubenrauch, Elmar, 31606 Warmsen (DE)
(74) Vertreter: Ostermann, Thomas

(57) **Zusammenfassung**

Die Erfindung betrifft eine Beleuchtungseinrichtung für Fahrzeuge mit einem Gehäuse, in dem ein Lichtauskoppelelement (7) angeordnet ist zur Erzeugung einer Lichtfunktion, und mit einer eine vordere öffnung des Gehäuses abdeckenden Abschlussscheibe, wobei dem Lichtauskoppelelement eine Lichteinkoppelstelle zugeordnet ist zur Einspeisung des Lichtes und wobei das Lichtauskoppelelement eine Mantelfläche aufweist, die an einer in Hauptabstrahlrichtung vorne angeordneten Vorderseite (8) eine Lichtauskoppelfläche und die an einer zu der Vorderseite gegenüberliegenden Rückseite (9) eine Mehrzahl von Reflexionselementen (10) aufweist, dass im Bereich der Lichteinkoppelstelle ein Lichtzuführungselement (17,18,20) angeordnet ist, an dessen freier Stirnseite eine Lichtquelle (19) angeordnet ist zur Einspeisung des Lichtes in das Lichtzuführungselement, wobei das Lichtzuführungselement derart ausgebildet ist, dass das Licht in Richtung einer Normalen einer dem Lichtauskoppelelement zugewandten Stirnseite des Lichtzuführungselementes in das Lichtauskoppelelement eingekoppelt wird.

## Beschreibung

Die Erfindung betrifft eine Beleuchtungseinrichtung für Fahrzeuge mit einem Gehäuse, in dem ein Lichtauskoppelelement angeordnet ist zur Erzeugung einer Lichtfunktion, und mit einer eine vordere Öffnung des Gehäuses abdeckenden Abschlussscheibe, wobei dem Lichtauskoppelelement eine Lichteinkoppelstelle zugeordnet ist zur Einspeisung des Lichtes und wobei das Lichtauskoppelelement eine Mantelfläche aufweist, die an einer in Hauptabstrahlrichtung vorne angeordneten Vorderseite eine Lichtauskoppelfläche und die an einer zu der Vorderseite gegenüberliegenden Rückseite eine Mehrzahl von Reflexionselementen aufweist, dass im Bereich der Lichteinkoppelstelle ein Lichtzuführungselement angeordnet ist, an dessen freier Stirnseite eine Lichtquelle angeordnet ist zur Einspeisung des Lichtes in das Lichtzuführungselement.

Aus der DE 197 39 173 A1 ist eine Beleuchtungseinrichtung für Fahrzeuge mit einem Gehäuse bekannt, in dem ein kreisringförmige verlaufendes Lichtauskoppelelement angeordnet ist. Das Lichtauskoppelelement ist im Querschnitt kreisförmig ausgebildet und weist eine Mantelfläche auf, die an einer Lichthauptabstrahlrichtung hinteren Seite Reflexionselemente aufweist, mittels derer das an einer Lichteinkoppelstelle eingeleitete Licht homogen in Richtung einer gegenüberliegenden Vorderseite des Lichtauskoppelelementes reflektiert wird. Die Vorderseite des Lichtauskoppelelementes bildet eine Lichtauskoppelfläche, so dass eine kreisringförmige leuchtende Fläche gebildet wird. Die Lichteinkoppelstelle befindet sich im Bereich von beiden Stirnseiten des Lichtauskoppelelementes, wobei ein Lichtzuführungselement mit seiner Mantelfläche unmittelbar an den gegenüberliegenden Stirnseiten des Lichtauskoppelelementes anliegt. Das Lichtzuführungselement erstreckt sich somit im Wesentlichen senkrecht zur Normalen der Stirnenden des Lichtauskoppelelementes, so dass das Lichtzuführungselement einen endseitigen Umlenkabschnitt aufweisen muss zur Umlenkung des Lichtes um einen vorgegebenen Winkel. Die Ausgestaltung der bekannten Beleuchtungseinrichtung ermöglicht zwar eine relativ homogen Auskopplung des Lichtes über die Längserstreckung des Lichtauskoppelelementes. Nachteilig an der bekannten Einrichtung ist jedoch, dass zur Einkopplung des Lichtes in das Lichtauskoppelelement dasselbe quasi "aufgeschnitten" sein muss, wobei eine Auftrennung von zueinandergekehrten Stirnseiten des Lichtauskoppelelementes an der Lichteinkoppelstelle erforderlich ist.

Aufgabe der vorliegenden Erfindung ist es daher, eine Beleuchtungseinrichtung für Fahrzeuge derart weiterzubilden, dass eine Lichteinkopplung in ein eine beliebige Kontur aufweisendes Lichtauskoppelelement ermöglicht wird, wobei eine homogene Ausleuchtung über die gesamte Kontur des Lichtauskoppelelementes gewährleistet ist.

Zur Lösung dieser Aufgabe ist die Erfindung in Verbindung mit dem Oberbegriff des Patentanspruchs 1 dadurch gekennzeichnet, dass das Lichtzuführungselement derart ausgebildet ist, dass das Licht in Richtung einer Normalen einer dem Lichtauskoppelelement zugewandten Stirnseite des Lichtzuführungselementes in das Lichtauskoppelelement eingekoppelt wird.

Der besondere Vorteil der Erfindung besteht darin, dass eine Einkopplung des Lichtes in ein Lichtauskoppelelement ermöglicht wird, ohne dass die Kontur des Lichtauskoppelelementes auf die Lichteinkoppelstelle angepasst sein muss. Das Lichtauskoppelelement kann eine beliebige Kontur aufweisen, wobei es an der Lichteinkoppelstelle geschlossen ausgebildet bzw. einen kontinuierlichen Verlauf aufweisen kann. Grundgedanke der Erfindung ist es, ein Lichtzuführungselement an das Lichtauskoppelelement derart heranzuführen und an der Lichteinkoppelstelle an das Lichtauskoppelelement anzusetzen, dass das Licht unter Fortsetzung der Lichtausbreitungsrichtung in dem Lichtzuführungselement in das Lichtauskoppelelement eingekoppelt wird. Demnach wird das Licht im Wesentlichen in Richtung einer Normalen einer dem Lichtauskoppelelement zugewandten Stirnseite des Lichtzuführungselementes dem Lichtauskoppelelement übergeben.

Nach einer bevorzugten Ausführungsform der Erfindung ist das Lichtzuführungselement an der Mantelfläche des Lichtauskoppelelementes angeformt, wobei eine Normale der Stirnseite des Lichtzuführungselementes im Wesentlichen koaxial zu einem sich unmittelbar anschließenden Segment des Lichtauskoppelelementes erstreckt. Vorteilhaft kann hierdurch eine unmittelbare Übergabe des Lichtstromes ohne Richtungsänderung desselben gewährleistet sein. Infolge der Ausbildung von Reflexionselementen an der Rückseite des Lichtauskoppelelementes kann eine kontinuierliche Ausleuchtung desselben über die gesamte Längserstreckung erfolgen. Dadurch, dass das Lichtzuführungselement keine Reflexionselemente oder Umlenkelemente aufweist, erfolgt keine Ausleuchtung des Lichtzuführungselementes selbst.
Vorteilhaft ermöglicht die Erfindung eine unterbrechungsfreie und homogene Ausleuchtung eines Lichtauskoppelelementes, das eine beliebige Kontur aufweist.

Nach einer Weiterbildung der Erfindung ist das Lichtzuführungselement als ein Lichtfinger ausgebildet, der frei von Reflexionselementen ist und über eine Mantelfläche verfügt, an der dem Lichtauskoppelelement zugewandten Stirnseite vollständig in Umfangsrichtung des Lichtfingers in ein Segment des Lichtauskoppelelementes übergeht. Der Lichtfinger erstreckt sich somit unter kontinuierlicher Verlängerung eines Segmentes des Lichtauskoppelelementes an einer Außenseite des Lichtauskoppelelementes.

Nach einer Weiterbildung der Erfindung befindet sich die Lichteinkoppelstelle in einem Eckbereich des Lichtauskoppelelementes, wobei mindestens ein Lichtzuführungselement in stetiger Verlängerung eines der im Eckbereich verlaufenden Segmente des Lichtauskoppelelementes verläuft. Die Übergabe des Lichtstromes erfolgt dabei in Erstreckungsrichtung des jeweiligen Segmentes des Lichtauskoppelelementes im Eckbereich. Die an einem freien Stirnende des Lichtzuführungselementes angeordneten Lichtquellen bzw. das Lichtzuführungselement selbst ist derart ausgebildet, dass unabhängig von der Länge der entsprechenden Segmente eine gleichmäßige Ausleuchtung über die Länge des Lichtauskoppelelementes gewährleistet ist.

Nach einer Weiterbildung der Erfindung ist dem mindestens einen Lichtzuführungselement eine Blende zugeordnet, so dass die Lichtzuführungselemente von außen nicht sichtbar sind. Vorzugsweise weist die Blende die gleiche Einfärbung auf wie die Abschlussscheibe, Vorzugsweise kann sie Bestandteil der Abschlussscheibe sein.

Weitere Vorteil der Erfindung ergeben sich aus den weiteren Unteransprüchen.

Ein Ausführungsbeispiel der Erfindung wird nachfolgend anhand der Zeichnungen näher erläutert.

Es zeigen:

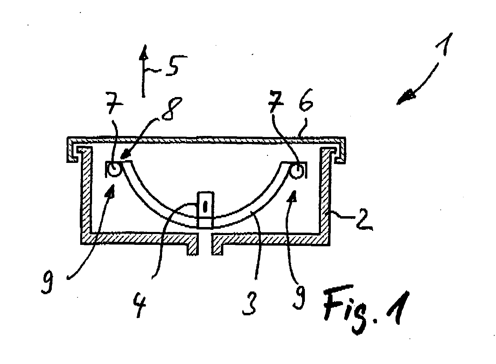

- Figur 1: einen schematischen Querschnitt durch eine Beleuchtungseinrichtung und
- Figur 2: eine schematische Vorderansicht eines Lichtauskoppelelementes der Beleuchtungseinrichtung mit in Eckbereichen angeordneten Lichtzuführungselementen zur Einkopplung des Lichtes in das Lichtauskoppelelement.

Eine Beleuchtungseinrichtung 1 für Fahrzeuge weist ein Gehäuse 2 auf, in dessen Innenraum ein Reflektor 3 und eine Lichtquelle 4 zur Erzeugung einer ersten Lichtfunktion, beispielsweise einer Bremslichtfunktion, angeordnet sind. Eine vordere Öffnung des Gehäuses 2, die in Hauptabstrahlrichtung 5 des Lichtes an einer Vorderseite der Beleuchtungseinrichtung 1 angeordnet ist, ist mittels einer beispielsweise rot eingefärbten Abschlussscheibe 6 abgedeckt.

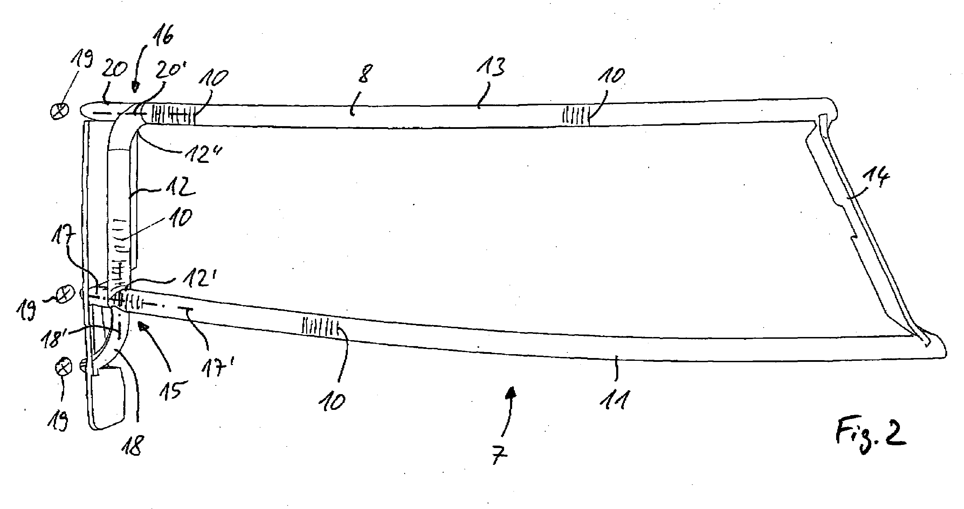

Zur Erzeugung einer zweiten Lichtfunktion, beispielsweise einer Schlusslichtfunktion, ist ein C-förmiges Lichtauskoppelelement 7 vorgesehen, dessen Kontur bzw. Längserstreckung mit der Kontur des Außenrandes der Beleuchtungseinrichtung 1 übereinstimmt. Das Lichtauskoppelelement 7 ist im Querschnitt kreisförmig ausgebildet und weist auf einer in Hauptabstrahlrichtung 5 vorne angeordneten Vorderseite 8 eine Lichtauskoppelfläche auf, durch die das Licht in Hauptabstrahlrichtung 5 abgestrahlt wird. An einer zur Vorderseite 8 gegenüberliegenden Rückseite 9 weist das Lichtauskoppelelement 7 eine Mehrzahl von Reflexionselementen 10 auf - in Figur 2 nur exemplarisch teilweise dargestellt -, so dass das in das Lichtauskoppelelement 7 eingekoppelte Licht homogen unter Totalreflexion an der Rückseite 9 in Richtung der Vorderseite 8 reflektiert und dort ausgekoppelt wird.

Das Lichtauskoppelelement 7 weist drei im Wesentlichen geradlinige Segmente 11, 12, 13 auf, wobei ein mittleres Segment 12 an einem ersten Ende 12' einstückig mit einem ersten langen Segment 11 und an einem zweiten Ende 12'' einstückig mit einem zweiten langen Segment 13 verbunden ist. Die langen Segmente 11, 13 sind an ihren freien Enden an einem Halteelement 14 befestigt, das beispielsweise mit dem Gehäuse 2 verbunden sein kann. Das Halteelement 14 dient somit allein zur Befestigung des Lichtauskoppelelementes 7.

In einem ersten Eckbereich 15 und in einem zweiten Eckbereich 16 des Lichtauskoppelelementes 7 ist jeweils eine Lichteinkoppelstelle vorgesehen zur Einkopplung des Lichtes in das Lichtauskoppelelement 7.

In dem ersten Eckbereich 15 sind dem Lichtauskoppelelement 7 ein erstes Lichtzuführungselement 17 und ein zweites Lichtzuführungselement 18 zugeordnet, denen jeweils an einer freien Stirnseite eine Lichtquelle 19 zugeordnet sind. In dem zweiten Eckbereich 16 ist ein drittes Lichtzuführungselement 20 dem Lichtauskoppelelement 7 angesetzt, das das Licht von einer der freien Stirnseite desselben zugeordneten Lichtquelle 19 zu der Lichteinkoppelstelle 16 zuführt. Die Lichtquelle 19 kann beispielsweise als LED-Leuchtelement ausgebildet sein. Die Lichtführungselementes 17, 18, 20 sind jeweils als Lichtfinger ausgebildet, die sich von dem Eckbereich 15 bzw. 16 weg geradlinig und/oder bogenförmig zu den jeweiligen Lichtquellen 19 erstrecken, die in einem Abstand zu dem Lichtauskoppelelement 7 angeordnet sind.

Die Lichtzuführungselemente 17, 18, 20 sind im Querschnitt kreisförmig ausgebildet und weisen keine Reflexionselemente an ihren Mantelflächen auf. Das an den freien Stirnseiten der Lichtzuführungselemente 17, 18, 20 eingekoppelte Licht wird jeweils in Längserstreckungsrichtung der Lichtzuführungselemente 17, 18, 20 weitergeleitet und an den jeweiligen Einkoppelstellen 15, 16 den Segmenten 11, 12, 13 übergeben.

Die Lichtzuführungselemente 17, 18, 20 sind in den Eckbereichen 15, 16 an dem Lichtauskoppelelement 7 angeformt, wobei im ersten Eckbereich 15 zwei Lichtzuführungselemente 17, 18 und in dem zweiten Eckbereich 16 lediglich ein Lichtzuführungselement 20 angesetzt ist. Die Anzahl der Lichtzuführungselemente 17, 18, 20 stimmt mit der Anzahl der Segmente 11, 12, 13 des Lichtauskoppelelementes 7 überein bzw. entspricht der um die Zahl eins erhöhten Anzahl erhöhten Eckbereiche 15, 16 des Lichtauskoppelelementes 7.

Die Lichtzuführungselemente 17, 18, 20 weisen eine solche dem Lichtauskoppelelement 7 zugewandte Stirnseite auf, dass das von den jeweiligen Lichtzuführungselementen 17, 18, 20 zugeführte Licht ohne Umlenkung bzw. in stetiger Verlängerung des Lichtzuführungselementes 17, 18, 20 in das Lichtauskoppelelement 7 eingekoppelt wird. Hierbei verläuft eine Normale 17' einer Stirnseite des ersten Lichtzuführungselementes 17 koaxial zu einer Längserstreckung des ersten Segmentes 11 im Einkoppelbereich 15. Des Weiteren verläuft eine Normale 18' einer Stirnseite des zweiten Lichtzuführungselementes 18 in Längserstreckung des zweiten Segmentes 12 an der Lichteinkoppelstelle 15. Des Weiteren verläuft eine Normale 20' in Längserstreckung des dritten Segmentes 13 an der zweiten Einkoppelstelle 16.

Die dem Lichtauskoppelelement 7 zugewandten Stirnseiten der Lichtzuführungselemente 17, 18, 20 gehen vollständig in den jeweiligen Eckbereichen 15, 16 des Lichtauskoppelelementes 7 über, wobei Mantelfläche der Lichtzuführungselemente 17, 18, 20 jeweils unmittelbar an einer Mantelfläche der entsprechenden Segmente 11, 12, 13 des Lichtauskoppelelementes 7 anliegen.

Die Formgebung der Lichtzuführungselemente 17, 18, 20 ist im dem Lichtauskoppelelement 7 zugewandten stirnseitigen Endbereich derart ausgebildet, dass das entsprechende stirnseitige Ende in Verlängerung eines Segmentes 11, 12, 13 angesetzt ist. Die Formgebung der Lichtzuführungselemente 17, 18, 20 ist auf einer dem Lichtauskoppelelement 7 zugewandten Seite somit abhängig von der Orientierung und/oder Anzahl der Segmente 11, 12, 13 des Lichtauskoppelelementes 7. Bei einer V-förmigen Formgebung des Lichtauskoppelelementes 7 ist lediglich eine einzige Einkoppelstelle vorgesehen, wobei die beiden Schenkel die Segmente des Lichtauskoppelelementes 7 bilden.

Vorzugsweise stimmt der Querschnitt der Lichtzuführungselemente 17, 18, 20 mit dem Querschnitt des Lichtauskoppelelementes 7 bzw. seiner Segmente 11, 12, 13 überein.

Die Einkopplung des Lichtes in das Lichtauskoppelelement 7 mittels der Lichtzuführungselemente 17, 18, 20 ermöglicht eine homogene Ausleuchtung entlang der Vorderseite 8 des Lichtauskoppelelementes 7. Die Anzahl der Lichtzuführungselemente ist abhängig von der Anzahl der Eckbereiche. Als Eckbereich wird ein Abschnitt des Lichtauskoppelelementes 7 angesehen, der nicht dazu geeignet ist, eine homogen Weiterleitung des Lichtes innerhalb des Lichtauskoppelelementes 7 zu gewährleisten. Vorzugsweise schließen benachbarte Segmente 11, 12, 13 in den Eckbereichen 15, 16 einen rechten Winkel bzw. einen relativ großen spitzen Winkel ein.

Da die Lichtzuführungselemente 17, 18, 20 und die Lichtquellen 19 in einem seitlichen Bereich neben dem Lichtauskoppelelement 7 angeordnet sind, kann zur Vermeidung der Sichtbarkeit derselben eine nicht dargestellte Blende angeordnet sein. Beispielsweise kann die Blende einstückig mit der Abschlussscheibe 6 verbunden sein, wobei sie in dem gleichen oder ähnlichen Farbton eingefärbt ist wie die Abschlussscheibe 6. Vorteilhaft befinden sich die Blende bzw. die Lichtzuführungselemente 17, 18, 20 sowie Lichtquelle 19 in einem Randbereich der Beleuchtungseinrichtung 1, so dass eine platzsparende Kaschierung dieser Bauteile ermöglicht wird.

## Patentansprüche

1. Beleuchtungseinrichtung für Fahrzeuge mit einem Gehäuse, in dem ein Lichtauskoppelelement angeordnet ist zur Erzeugung einer Lichtfunktion, und mit einer eine vordere Öffnung des Gehäuses abdeckenden Abschlussscheibe, wobei dem Lichtauskoppelelement eine Lichteinkoppelstelle zugeordnet ist zur Einspeisung des Lichtes und wobei das Lichtauskoppelelement eine Mantelfläche aufweist, die an einer in Hauptabstrahlrichtung vorne angeordneten Vorderseite eine Lichtauskoppelfläche und die an einer zu der Vorderseite gegenüberliegenden Rückseite eine Mehrzahl von Reflexionselementen aufweist, dass im Bereich der Lichteinkoppelstelle ein Lichtzuführungselement angeordnet ist, an dessen freier Stirnseite eine Lichtquelle angeordnet ist zur Einspeisung des Lichtes in das Lichtzuführungselement, **dadurch gekennzeichnet, dass** das Lichtzuführungselement (17, 18, 20) derart ausgebildet ist, dass das Licht in Richtung einer Normalen (17', 18', 20') einer dem Lichtauskoppelelement (7) zugewandten Stirnseite des Lichtzuführungselementes (17, 18, 20) in das Lichtauskoppelelement (7) eingekoppelt wird.

2. Beleuchtungseinrichtung nach Anspruch 1, **dadurch gekennzeichnet, dass** das Lichtzuführungselement (17, 18, 20) an der Mantelfläche des Lichtauskoppelelementes (7) angeformt ist, wobei sich die Normale (17', 18', 20') der Stirnseite des Lichtzuführungselementes (17, 18, 20) im Wesentlichen koaxial zu einem sich unmittelbar an demselben anschließenden Segment (11, 12, 13) des Lichtauskoppelelementes (7) erstreckt.

3. Beleuchtungseinrichtung nach Anspruch 1 oder 2, **dadurch gekennzeichnet, dass** das Lichtzuführungselement (17, 18, 20) an der Mantelfläche des Lichtauskoppelelementes (7) derart angeordnet ist, dass entlang der Vorderseite (8) des Lichtauskoppelelementes (7) gleichmäßig Licht austritt.

4. Beleuchtungseinrichtung nach einem der Ansprüche 1 bis 3, **dadurch gekennzeichnet, dass** das Lichtzuführungselement (17, 18, 20) als ein Lichtfinger ausgebildet ist, der über eine frei von Reflexionselementen ausgebildete Mantelfläche verfügt, die an der dem Lichtauskoppelelement (7) zugewandten Stirnseite in Umfangsrichtung vollständig in ein einziges Segment (11, 12, 13) des Lichtauskoppelelementes (7) übergeht.

5. Beleuchtungseinrichtung nach einem der Ansprüche 1 bis 4, **dadurch gekennzeichnet, dass** die Reflexionselemente (10) an der Rückseite (9) des Lichtauskoppelelementes (7) derart ausgebildet sind, dass über die Längserstreckung des Lichtauskoppelelementes (7) das Licht an der Vorderseite (8) desselben gleichmäßig ausgekoppelt wird.

6. Beleuchtungseinrichtung nach einem der Ansprüche 1 bis 5, **dadurch gekennzeichnet, dass** die Lichteinkoppelstelle in einem Eckbereich (15, 16) des Lichtauskoppelelementes (7) angeordnet ist, in dem mindestens zwei Segmente (11, 12, 13) des Lichtauskoppelelementes (7) unter einem Winkel zusammenlaufen, und in dem mindestens ein Lichtzuführungselement (17, 18, 20) in stetiger Verlängerung zu einem der im Eckbereich zusammenlaufenden Segment (11, 12, 13) des Lichtauskoppelelementes (7) verläuft.

7. Beleuchtungseinrichtung nach einem der Ansprüche 1 bis 6, **dadurch gekennzeichnet, dass** das Lichtauskoppelelement (7) aus einer Mehrzahl von einstückig miteinander verbundenen Segmenten (11, 12, 13) gebildet ist und dass die Anzahl der Lichtzuführungselemente (17, 18, 20) mit der um die Anzahl eins erhöhte Anzahl der Eckbereiche (15, 16) des Lichtauskoppelelementes (7) übereinstimmt.

8. Beleuchtungseinrichtung nach einem der Ansprüche 1 bis 7, **dadurch gekennzeichnet, dass** dem mindestens einen Lichtzuführungselement (17, 18, 20) eine Blende zugeordnet ist, derart, dass das mindestens eine Lichtzuführungselement (17, 18, 20) verdeckt angeordnet ist.

9. Beleuchtungseinrichtung nach Anspruch 8, **dadurch gekennzeichnet, dass** die Blende einstückig mit der Abschlussscheibe (6) verbunden ist und dass die Blende in dem gleichen oder ähnlichen Farbton eingefärbt ist wie die Abschlussscheibe (6)

10. Beleuchtungseinrichtung nach einem der Ansprüche 1 bis 7, **dadurch gekennzeichnet, dass** das Lichtauskoppelelement (7) in Längsrichtung C-förmig oder V-förmig verläuft.
